# EUROPEAN PATENT SPECIFICATION

(11) **EP 2 672 312 B1**
(45) Date of publication and mention of the grant of the patent: **26.08.2015**
(21) Application number: 12741513.1
(22) Date of filing: 12.01.2012
(51) Int. Cl.: G02F 1/1345

(54) **DISPLAY DEVICE**
ANZEIGEVORRICHTUNG
DISPOSITIF D'AFFICHAGE

(30) Priority: 31.01.2011 JP 2011017493
(43) Date of publication of application: 11.12.2013
(73) Proprietor: Nippon Seiki Co., Ltd., Niigata 940-8580 (JP)
(72) Inventor: SUZUKI,Toshiaki, Nagaoka Niigata (JP)
(74) Representative: Carpmaels & Ransford LLP
(86) International application number: PCT/JP2012/050452
(87) International publication number: WO 2012/105287

(56) References cited:
- JP-A- 3 243 922
- JP-A- 2000 010 500
- JP-A- 2002 140 013
- JP-A- 2002 169 143

## Description

### TECHNICAL FIELD

The present invention relates to a display device in which a display element is connected to a circuit board.

### BACKGROUND ART

Conventionally, various liquid crystal display devices provided with a liquid crystal display element having a lead terminal have been proposed, for example, as disclosed in Patent Literature 1. Such a liquid crystal display device includes a liquid crystal display element having a plurality of lead terminals; a circuit board to which the lead terminals of the liquid crystal display element are connected; and a housing that retains the liquid crystal display element. The lead terminals of the liquid crystal display element are passed through the lead holes of the circuit board, and are connected electrically through soldering. Such a liquid crystal display device is also disclosed in JP2002169143, on which the preamble of claim 1 is based.

### CITATION LIST

### PATENT LITERATURE

Patent Literature 1 : Japanese Unexamined Patent Application Publication No. H08-023180

### SUMMARY OF THE INVENTION

### PROBLEMS TO BE SOLVED BY THE INVENTION

However, a risk that existed was that when the housing is positioned on the circuit board, the solder that connects the lead terminals of the liquid crystal display element to the circuit board breaks due to the difference in the coefficient of thermal expansion between the circuit board and the housing, and as a result, the electrical connection between the liquid crystal display element and the circuit board is disconnected, and the desired display cannot be performed on the liquid crystal display element.

The present invention has been achieved in view of the above problem, and an object thereof is to provide a display device with which the risk of breakage of the solder connecting the lead terminals of the liquid crystal display element can be reduced.

### MEANS FOR SOLVING THE PROBLEM

A display device comprising: a display element 10,20 having a lead terminal 12, 22, 13; a circuit board 30 connected electrically to the lead terminal 12, 22, 13; a housing 40 that stores the display element 10, 20; and a lead guiding portion 50, 60 that has a through hole 52, 62 in which the lead terminal 12, 22, 13 is inserted, wherein the lead guiding portion 50, 60 has a positioning portion 51, 61 positioned in the circuit board 30; and an elastic support portion 53, 63 connected to the housing.

Further, the display device according to present invention, wherein the housing 40 has a positioning portion 43 positioned in the circuit board 30.

The display device according to the present invention, wherein the display element 10, 20 has a liquid crystal display panel 11, 21.

The display device according to the present invention, comprising a light emitting element 70, 80 loaded on the circuit board 30 and transilluminating the liquid crystal display panel 11, 21.

### EFFECT OF THE INVENTION

The risk of disconnection of the electric connection between the display element and the circuit board due to the difference in the coefficient of thermal expansion between the circuit board and the housing can be reduced.

### BRIEF DESCRIPTION OF THE DRAWINGS

[Fig. 1] Fig. 1 is a cross-sectional view illustrating a first embodiment of the present invention.
[Fig. 2] Fig. 2 is an enlarged cross-sectional view illustrating the same embodiment as above.
[Fig. 3] Fig. 3 is a cross-sectional view illustrating the same embodiment as above.
[Fig. 4] Fig. 4 is a cross-sectional view illustrating the same embodiment as above.
[Fig. 5] Fig. 5 is a cross-sectional view illustrating a second embodiment of the present invention.
[Fig. 6] Fig. 6 is an enlarged cross-sectional view of the main section illustrating the same embodiment as above.
[Fig. 7] Fig. 7 is a front view illustrating a third embodiment of the present invention.
[Fig. 8] Fig. 8 is a perspective view illustrating the same embodiment as above.
[Fig. 9] Fig. 9 is a perspective view illustrating the same embodiment as above.

### DESCRIPTION OF EMBODIMENTS

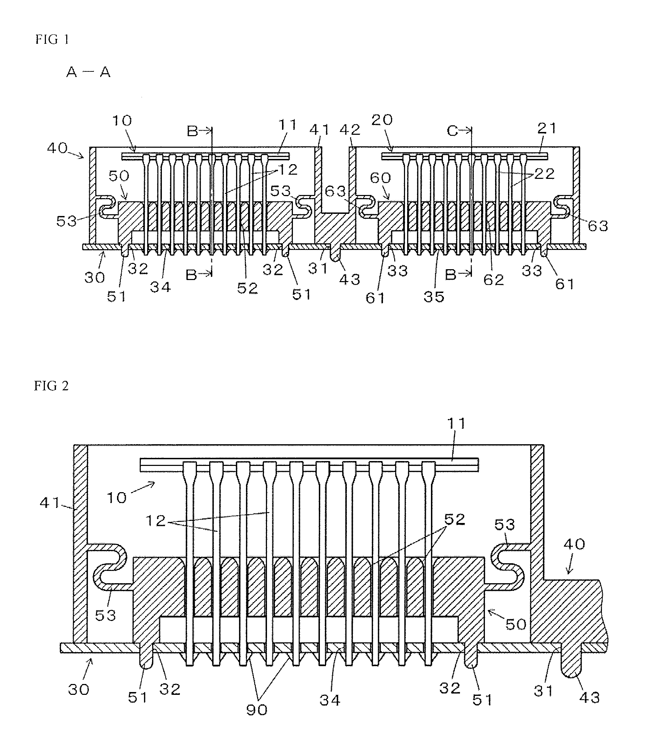

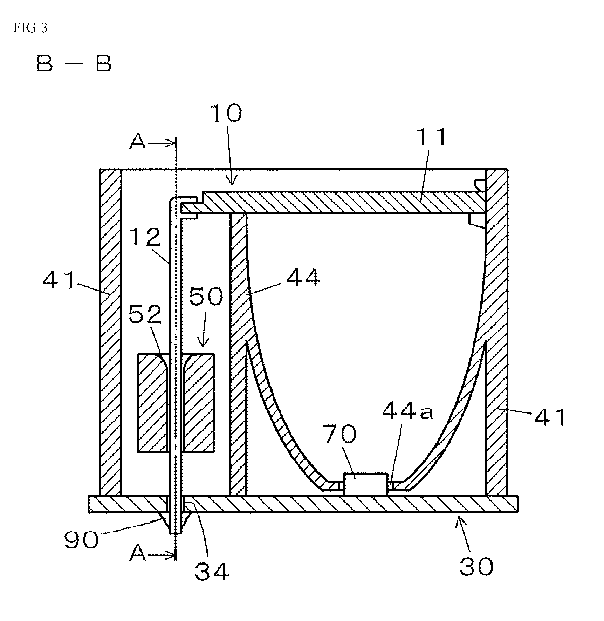

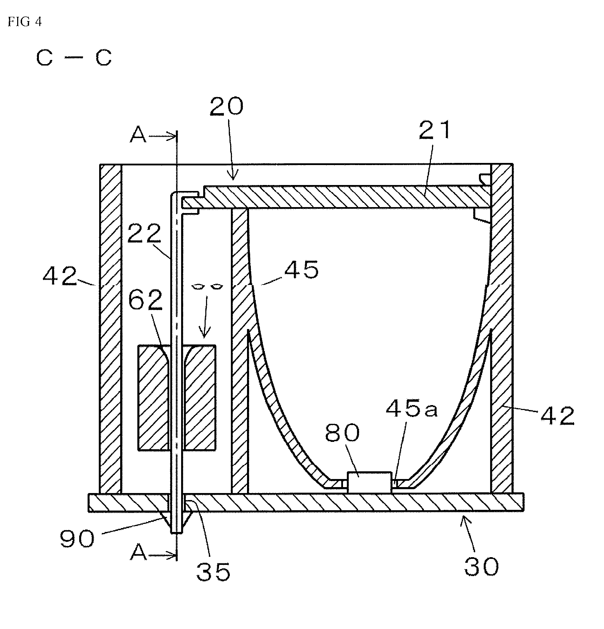

Hereinafter, a first embodiment of the present invention will be described with reference to the attached drawings. Fig. 1 through Fig. 4 are drawings illustrating the first embodiment.

A liquid crystal display device includes liquid crystal display elements 10 and 20, a circuit board 30, a housing 40, lead guiding portions 50 and 60, and light emitting elements 70 and 80.

The liquid crystal display elements 10 and 20 have liquid crystal display panels 11 and 21, and a plurality of lead terminals 12 and 22, respectively. The liquid crystal display panels 11 and 21 are formed by pasting a polarizing member on both front and back surfaces of a liquid crystal cell in which an NVA liquid crystal is sealed between a pair of light-transmissive substrates. The lead terminals 12 and 22 are made of metal, with one end thereof connected electrically to the circuit board 30. The other end of the lead terminals 12 and 22 forms a U shape, and is connected electrically while sandwiching the liquid crystal display panels 11 and 21.

The circuit board 30 is made of a hard wiring board in which a wiring pattern is formed on a glass epoxy substrate, and the light emitting elements 70 and 80, etc., are loaded thereupon. Positioning holes 31, 32, and 33, and lead holes 34 and 35 are formed in the circuit board 30. The positioning hole 31 of the circuit board 30 is formed in the central part, and is used to position the housing 40. The positioning hole 31 is made of a circular through hole in the front view in which a projecting portion described later is inserted.

The positioning holes 32 and 33 position the lead guiding portions 50 and 60, respectively. The lead holes 34 and 35 are holes through which the lead terminals 12 and 22 of the liquid crystal display elements 10 and 20 pass. The lead terminals 12 and 22 of the liquid crystal display elements 10 and 20 are connected electrically, with a solder 90, to the wiring pattern on the back surface of the circuit board 30. The circuit board 30 is locked onto the back surface of the housing 40 with an elastic locking piece (not shown in the figures).

The housing 40 is made of a white resin, and includes case bodies 41 and 42 that store the liquid crystal display elements 10 and 20; a projecting portion (first positioning portion) 43 inserted in the positioning hole 31 of the circuit board 30; and reflectors 44 and 45 that reflect the illumination light emitted from the light emitting elements 70 and 80. The projecting portion 43 of the housing is formed in the central part and has a near circular cylindrical shape with the end thereof in a hemispherical shape. The reflectors 44 and 45 are formed as one part with the case bodies 41 and 42, and are provided with openings 44a and 45a in which the light emitting elements 70 and 80 are arranged. An elastic retaining portion (not shown in the figures) that retains the liquid crystal display elements 10 and 20 is provided in the case bodies 41 and 42.

The circuit board 30 is positioned in the central part of the housing 40 due to the insertion of the projecting portion 43 of the housing 40 in the positioning hole 31. When the housing 40 expands and contracts relatively with respect to the circuit board 30 due to the difference in the coefficient of thermal expansion between the circuit board 30 and the housing 40, the housing 40 expands and contracts with the central part of the circuit board 30 as the center.

The lead guiding portions 50 and 60 are made of a white resin, and respectively include projecting portions (second positioning portions) 51 and 61 that are inserted in the positioning holes 32 and 33 of the circuit board 30; and through holes 52 and 62 through which the lead terminals 12 and 22 of the liquid crystal display elements 10 and 20 pass. The lead guiding portions 50 and 60 include elastic connecting portions 53 and 63, and are connected to the case bodies 41 and 42 of the housing 40 with the elastic connecting portions 53 and 63. The elastic connecting portions 53 and 63 of the lead guiding portions 50 and 60 bend in an S shape in the side view. The case bodies 41 and 42 and the lead guiding portions 50 and 60 are formed as one part through the elastic connecting portions 53 and 63.

The light emitting elements 70 and 80 are made of surface-mounted light emitting diodes, and are electrically connected to the wiring pattern in the front surface of the circuit board 30. The liquid crystal display elements 10 and 20 are transilluminated by the illumination light emitted from the light emitting elements 70 and 80.

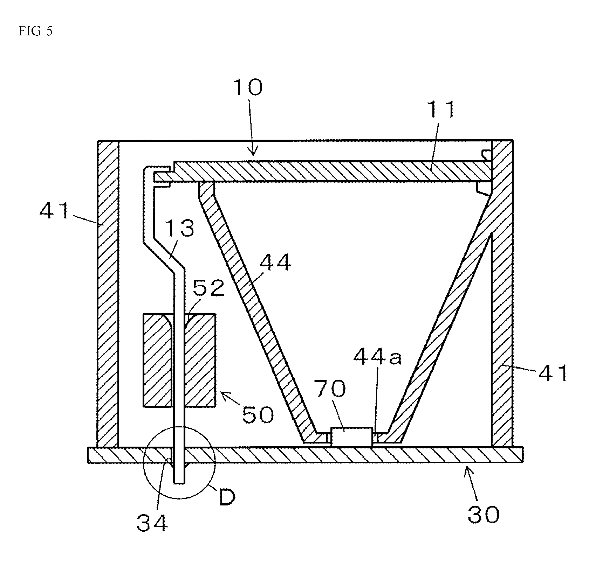

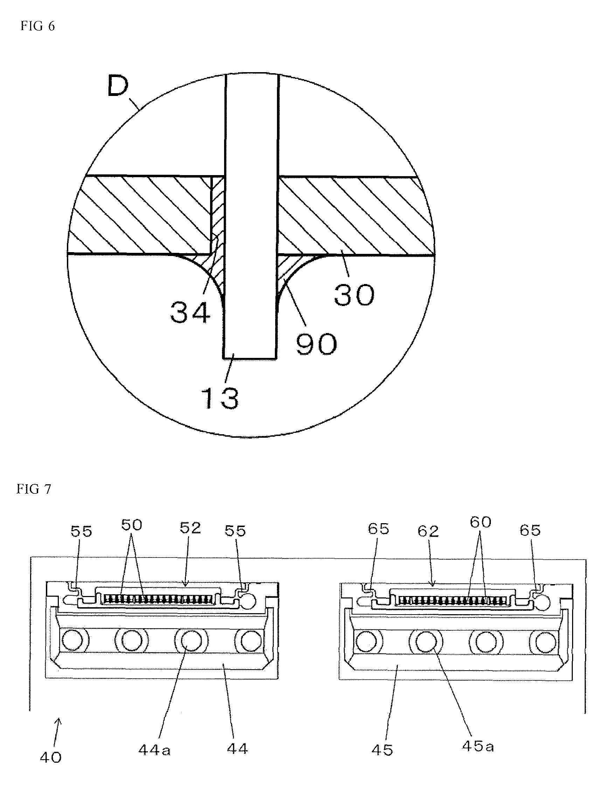

Fig. 5 and Fig. 6 illustrate a second embodiment. In the second embodiment, particularly, the lead terminal 13 is different from that in the first embodiment, but the other configuration is the same as that in the first embodiment. Therefore, the same reference numerals are used for the same or equivalent configuration, and the detailed explanation thereof is omitted.

The liquid crystal display element 10 includes a liquid crystal display panel 11 and a plurality of lead terminals 13. The liquid crystal display panel 11 is retained in the case body 41 with an elastic retaining portion (not shown in the figures). The lead terminal 13 is formed in a curved shape, with one end thereof connected electrically to the circuit board 30 with the solder 90. The other end of the lead terminal 13 forms a U shape, and is connected electrically while sandwiching the liquid crystal display panel 11. The lead terminal 13 is in contact with the through hole 52 of the lead guiding portion 50, and the lead hole 34 of the circuit board 30, at the side of the reflector 44.

As described in the second embodiment, by bringing the lead terminal 13 in contact with the lead hole 34 of the circuit board 30, even when the housing 40 is inverted before one end of the lead terminal 13 is soldered on to the circuit board 30, the liquid crystal display element 11 can be retained in the housing 40, which makes an assembly task of the display device easier.

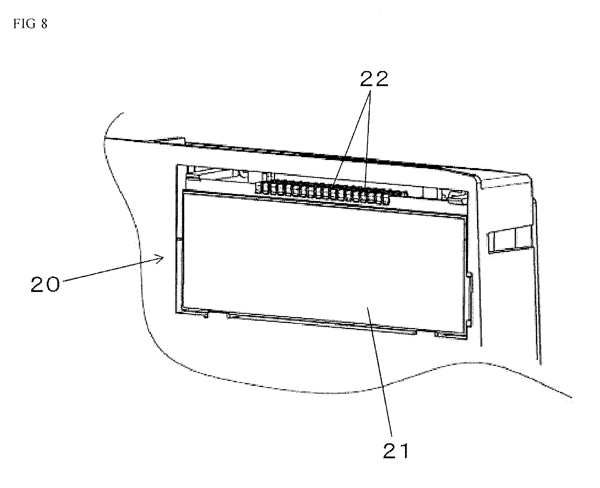

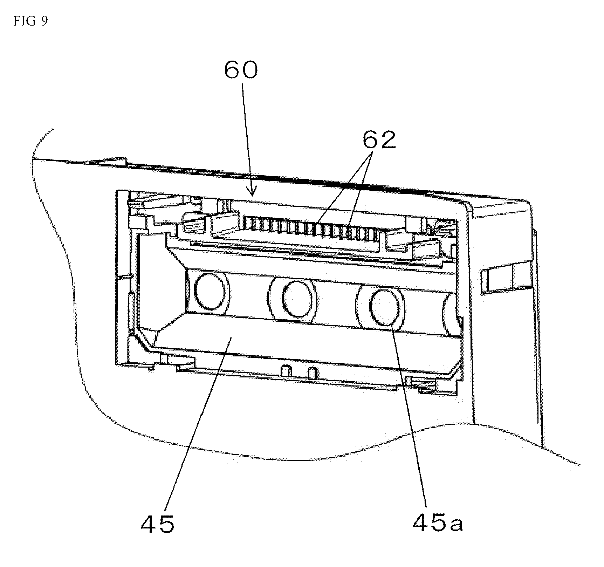

Fig. 7 through Fig. 9 illustrate a third embodiment. In the third embodiment, particularly, the elastic connecting portions 55 and 65 are different from those in the first embodiment. The other configuration is assigned with the same reference numerals as those in the first embodiment and the detailed explanation thereof is omitted.

The lead guiding portions 50 and 60 include elastic connecting portions 55 and 65 and are connected to the housing 40 with the elastic connecting portions 55 and 65. The elastic connecting portions 55 and 65 bend in a crank shape in the front view. The housing 40 and the lead guiding portions 50 and 60 are formed as one part through the elastic connecting portions 55 and 65.

According to each of the embodiments, because the lead guiding portions 50 and 60 are positioned in the positioning holes 32 and 33 of the circuit board 30, the position of the through holes 52 and 62 of the lead guiding portions 50 and 60, and the position of the lead holes 34 and 35 of the circuit board 30 match, which makes it easier to insert the lead terminals 12, 22, and 13 of the liquid crystal display elements 10 and 20 into the lead holes 34 and 35 of the circuit board 30. Moreover, the stress due to the difference in the coefficient of thermal expansion between the circuit board 30 and the housing 40 can be absorbed by the elastic connecting portions 53, 63, 55, and 65, and the breakage of the solder 90 that electrically connects the lead terminals 12, 22, and 13 of the liquid crystal display elements 10 and 20 to the circuit board 30 can be prevented.

It must be noted that the present invention is not limited to each of the above embodiments, and can have various modifications. For example, in each of the embodiments, the housing 40 is positioned by inserting the projecting portion 43 of the housing 40 in the positioning hole 31 of the circuit board 30, however, the circuit board 30 may be secured onto the central part of the housing 40 with screws. Furthermore, the reflectors 44 and 45 are provided in the case bodies 41 and 42, but may be provided in the lead guiding portions 50 and 60. Furthermore, the display element in each of the embodiments is the liquid crystal display element 10, 20, but the display element can also be an organic EL display element, for example.

### INDUSTRIAL APPLICABILITY

The present invention can be used in a display device in which a display element is connected to a circuit board.

### DESCRIPTION OF REFERENCE NUMERALS

10 Liquid crystal display element (display element)
11 Liquid crystal display panel
12 Lead terminal
13 Lead terminal
22 Lead terminal
20 Liquid crystal display element (display element)
21 Liquid crystal display panel
30 Circuit board
40 Housing
43 Projecting portion (first positioning portion)
50 Lead guiding portion
51 Projecting portion (second positioning portion)
52 Through hole
60 Lead guiding portion
61 Projecting portion (second positioning portion)
62 Through hole
63 Elastic support portion
53 Elastic support portion
70 Light emitting element
80 Light emitting element

## Claims

1. A display device comprising:
a display element (10, 20) having a lead terminal (12, 22, 13); a circuit board (30) connected electrically to the lead terminal;
a housing (40) that stores the display element; and
a lead guiding portion (50, 60) that has a through hole (52, 62) in which the lead terminal is inserted, wherein
the lead guiding portion has a positioning portion (51, 61) positioned in the circuit board; **characterised in that** the lead guiding portion has an elastic support portion (53, 63) connected to the housing.

2. A display device of claim 1, wherein the housing has a positioning portion (43) positioned in the circuit board.

3. The display device according to claim 1 or claim 2, wherein the display element has a liquid crystal display panel (11, 21).

4. The display device according to claim 3, comprising a light emitting element (70, 80) loaded on the circuit board and transilluminating the liquid crystal display panel.

## Patentansprüche

1. Anzeigevorrichtung, die Folgendes umfasst:
ein Anzeigeelement (10, 20) mit einem Leitungsanschluss (12, 22, 13); eine Leiterplate (30), die mit dem Leitungsanschluss elektrisch verbunden ist;
ein Gehäuse (40), das das Anzeigeelement aufnimmt; und
ein Leitungsführungsteil (50, 60), das ein Durchgangsloch (52, 62) aufweist, in das der Leitungsanschluss eingesetzt ist, wobei
das Leitungsführungsteil ein Positionierungsteil (51, 61) aufweist, das in der Leiterplatte positioniert ist; **dadurch gekennzeichnet, dass** das Leitungsführungsteil ein elastisches Auflageteil (53, 63) aufweist, das mit dem Gehäuse verbunden ist.

2. Anzeigevorrichtung nach Anspruch 1, wobei das Gehäuse ein Positionierungsteil (43) aufweist, das in der Leiterplatte positioniert ist.

3. Anzeigevorrichtung nach Anspruch 1 oder 2, wobei das Anzeigeelement ein Flüssigkristallanzeige-Panel (11, 21) aufweist.

4. Anzeigevorrichtung nach Anspruch 3, die ein lichtemittierendes Element (70, 80) umfasst, das auf der Leiterplatte angebracht ist und das das Flüssigkristallanzeige-Panel durchleuchtet.

## Revendications

1. Dispositif d'affichage comprenant :
un élément d'affichage (10, 20) ayant une borne de raccordement (12, 22, 13) ; une carte à circuits imprimés (30) connectée électriquement à la borne de raccordement ;
un boîtier (40) qui reçoit l'élément d'affichage ; et
une portion de guidage de fil (50, 60) qui présente un trou traversant (52, 62) dans lequel est insérée la borne de raccordement,
la portion de guidage de fil ayant une portion de positionnement (51, 61) positionnée dans la carte à circuits imprimés ; **caractérisé en ce que** la portion de guidage de fil présente une portion de support élastique (53, 63) connectée au boîtier.

2. Dispositif d'affichage selon la revendication 1, dans lequel le boîtier présente une portion de positionnement (43) positionnée dans la carte à circuits imprimés.

3. Dispositif d'affichage selon la revendication 1 ou la revendication 2, dans lequel l'élément d'affichage présente un panneau d'affichage à cristaux liquides (11, 21).

4. Dispositif d'affichage selon la revendication 3, comprenant un élément émetteur de lumière (70, 80) chargé sur la carte à circuits imprimés et transmettant la lumière à travers le panneau d'affichage à cristaux liquides.
